# EUROPEAN PATENT APPLICATION

(11) **EP 3 643 684 A1**
(43) Date of publication of application: **29.04.2020**
(21) Application number: 18201730.1
(22) Date of filing: 22.10.2018
(51) Int. Cl.: C02F 1/467, C02F 103/02, C02F 103/42, C02F 1/461

(54) **SYSTEM AND PROCEDURE FOR THE DISINFECTION AND PRESERVATION OF WATER IN CIRCUITS WITH WATER ACCUMULATION BY MEANS OF APPLYING COMBINED ELECTROPORATION AND OXIDATION**

(71) Applicant: Geodesic Innovations, S.L., 28007 Madrid (ES)
(72) Inventor: Ibañez Botella, Juan, 28007 Madrid (ES); Botija Ibáñez, Luis, 28007 Madrid (ES)
(74) Representative: Lahidalga de Careaga, Jose Luis

(57) **Abstract**

The invention reveals a system and a procedure with combined electroporation and electro-oxidation techniques. The system includes at least one mixed cell (electroporation-electro-oxidation) (1.1) that consists of a plurality of anodes and cathodes (4,5) distributed in such a way that they form a structure in the shape of a prism and are housed in an internal casing (6); it also consists of probes for measuring the electrical conductivity, temperature, redox potential values, pH, and a controller (2.1) connected with wires or wirelessly to all the elements. The system also presents a method for the disinfection and preservation of the water in water accumulation circuits, by means of the combined application of electroporation and oxidation.

## Description

### PURPOSE OF THE INVENTION

This invention reveals a system and procedure of combined techniques of electroporation and electro-oxidation with the aim of maintaining adequate sanitary conditions in closed and semi-closed water circuits, such as storage tanks, swimming pools, cooling towers, etc., in such a way that a concentration of oxidants in the water is sufficient for combatting recontamination due to the effect of the possible foci or potential polluting agents.

### BACKGROUND OF THE INVENTION

The invention is based on the combination of two simultaneous or alternating phases of the techniques of electroporation and advanced electro-oxidation, in such a way that they allow achieving the objectives of water treatment in installations with typical microbiological risks, avoiding all the inconveniences of the traditional techniques, and ensuring an extraordinary water quality.

Therefore, this invention contributes as a novelty a system and procedure that adds to the electroporation cells of certain materials, in such a way that they act as mixed electroporation and electro-oxidation cells, so that, during the treatment process, not only the electroporation of the bacteria is achieved, but reactions of direct oxidation are provoked of reducers contained in the water, as well as the generation of oxidants such as hydroxyl radicals or active chlorine generated from the chlorides present in the water. The choice of the type of cover with which the electrodes are manufactured will determine the specificity of the desired oxidant. In this way, combining the electro-physical phenomenon of the reactors with the phenomena of direct electro-oxidation and electrochemical generation of oxidants in situ is achieved, with the latter acting as residual biocide in all the points of the circuit.

When this disinfection technique is transferred to closed or semi-closed water circuits, where retention is produced (storage tanks, swimming pools, cooling towers), confronting the disinfection of the entire circuit by means of electroporation presents two serious drawbacks. In the first place, it is mandatory to generate a recirculation line that permits all the water of the circuit to be treated in the electroporation cells with a regular frequency that guarantees the maintenance of the disinfection, introducing an unnecessary energy cost.
In the second place, the electroporation is produced physically in the cells for which reason it cannot attack resistant structures such as the biofilm that can be generated in remote points of the circuit, acting as foci of reinfection of the water.

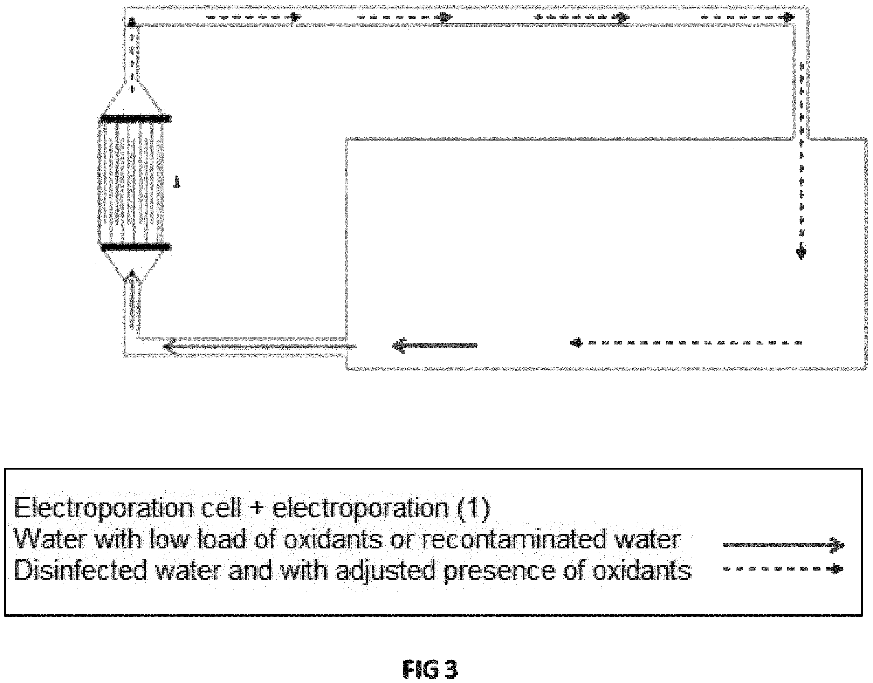

By allocating certain materials to the electroporation cells, they can be converted into mixed electroporation and electro-oxidation cells in such a way that, during the treatment process, not only the electroporation of the bacteria is achieved but reactions of direct oxidation of reducers contained in the water are also provoked, as well as the generation of oxidants such as hydroxyl radicals or active chlorine generated from the chlorides present in the water. The choice of the type of cover with which the electrodes are manufactured will determine the specificity of the desired oxidant. In this way, combining the electro-physical phenomenon of the reactors with the phenomena of direct electro-oxidation and electrochemical generation of oxidants in situ is achieved, with the latter acting as residual biocide in all the points of the circuit (fig.3). This maintains the advantages of the electroporation as a disinfectant without penalizing the energy costs, optimizing the water quality, and guaranteeing the disinfection in all the points of the circuit through the destruction of resistant structures and the prevention of their formation.

In the state of the art there is the European patent EP1741675 that reveals a method and a device for water treatment that consists of providing a way to treat the water while maintaining drinking water quality, and the excessive use of chemical products is avoided. the water can be used directly for human consumption or be used in a series of processes in industry where that quality is required. According to the invention, a water treatment device is provided that consists of: a cathode, an anode that is made up of a matrix of two metals (a first and a second), and means to apply a predetermined difference of potential between the anode and the cathode; where the matrix is placed so that when the predetermined difference of potential in use is applied, both the electroporation and the production of oxidants are produced in the passing of untreated water, in use, between the anode and cathode in order to kill, in use, contaminants. In the first place, it is necessary to have two anodes with the same geometry, one with a perfect platinum surface. The free chlorine is generated on a platinum surface at a fixed speed in fixed conditions and it reacts equally with bacteria and organic materials in almost identical circumstances. However, the free chlorine has an initial reaction speed, very fast, that is difficult to measure precisely. Therefore, the quality of the water after the initial rapid elimination of the bacteria and the reaction with other substances in the water is measured for the first anode and a given concentration of free chlorine at a certain time after the reaction in order to obtain a more precise measurement. The concentration of free chlorine in the test solution is measured under the parameters of the application in question. This includes the concentration of the relevant compounds and the pH. Then a second anode is used, of an identical size and geometry as the first anode with the test solution. The matrix metal is aggregated to the platinum until the concentration of free chlorine at the same determined moment after the treatment of the test solution is approximately 50% of that obtained with the anode with the perfect platinum surface. The two test solutions are examined to determine the residual content of live bacteria.

The invention makes use of the electroporation process for the rest of the destruction of necessary bacteria in order to purify water to a satisfactory degree. The cell is enclosed by a membrane. In the live cells there is a difference of potential between the solution outside the membrane and inside the cell of approximately 100 mV. This corresponds to a potential gradient through the membrane of 200 000 to 300 000 V / cm. When an external potential is applied through a cell, the majority of the drop in potential occurs in the membrane due to its greater ohmic resistance. When the applied potential is in a range higher than a certain value, but below a critical value, openings are produced in the membrane that can be used for the interchange of chemical substances. In this range of potential, the holes are again closed when the external potential is eliminated. However, when the potential exceeds the critical value, the openings in the membrane remain open. This will kill the bacteria either due to the loss of essential chemicals or due to the entry of water caused by the difference in the osmotic pressure between the interior and the exterior of the cell.

The invention, therefore, in its principal claim protects a water treatment device that consists of: a cathode, an anode that is made up of a matrix of two metals (a first and a second), and the means to apply a predetermined difference of potential between the anode and the cathode; where the matrix is placed so that when the predetermined difference of potential in use is applied, both the electroporation and the production of oxidants are produced in the passing of untreated water, in use, between the anode and cathode in order to kill, in use, biological contaminants.

The problems of the patent EP1741675, such as, for example, a possible formation of free chlorine on the platinum surface in a quantity over that required, are derived from the fact that once an electrode is installed with a defined matrix, it is not possible to make it work dynamically so that if excessive chlorine is produced it would be necessary to manufacture a new electrode with a different matrix than the first one.

In view of this unsatisfactory scenario, the present invention, using the developed industrial system, applies a mixed method used innovatively in a combined way under a sophisticated operating and control system that allows replacing the techniques traditionally used up to now, and thus:
- It does away with the use of chemical reagents, thus avoiding damage to health, the environment and installation materials.
- It does away with the use of the traditional technique of free chlorine production by means of the addition of sodium chloride to the water as a precursor.

### DESCRIPTION OF THE DRAWINGS

In order to supplement the description that is being made and with the aim of aiding a better understanding of the invention's characteristics, according to a preferred example of its practical realization, a set of drawing is included as an integral part of this description, which are shown as an example but are not limited to the following:

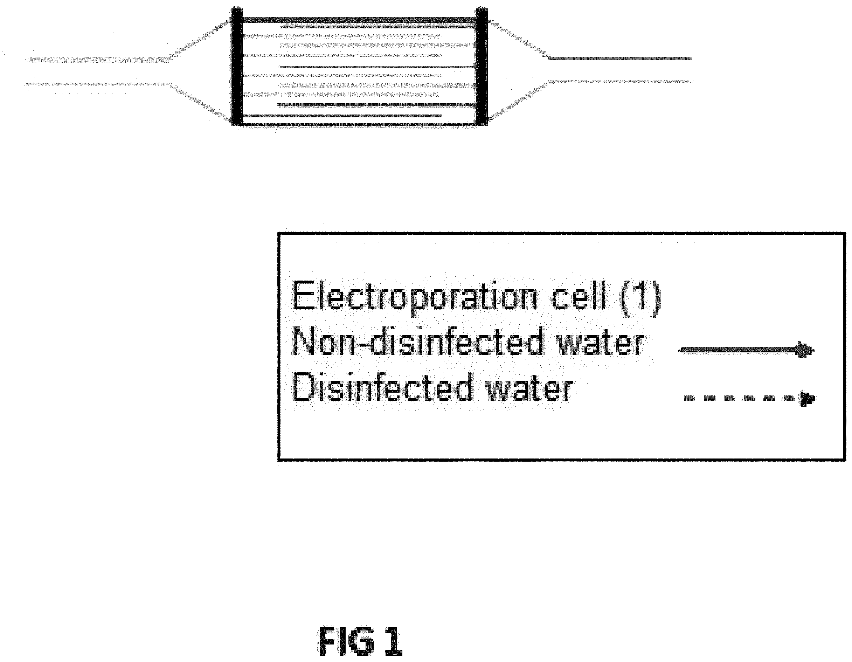

Figure 1 shows a schematic view of an electroporation cell characteristic of the state of the art.

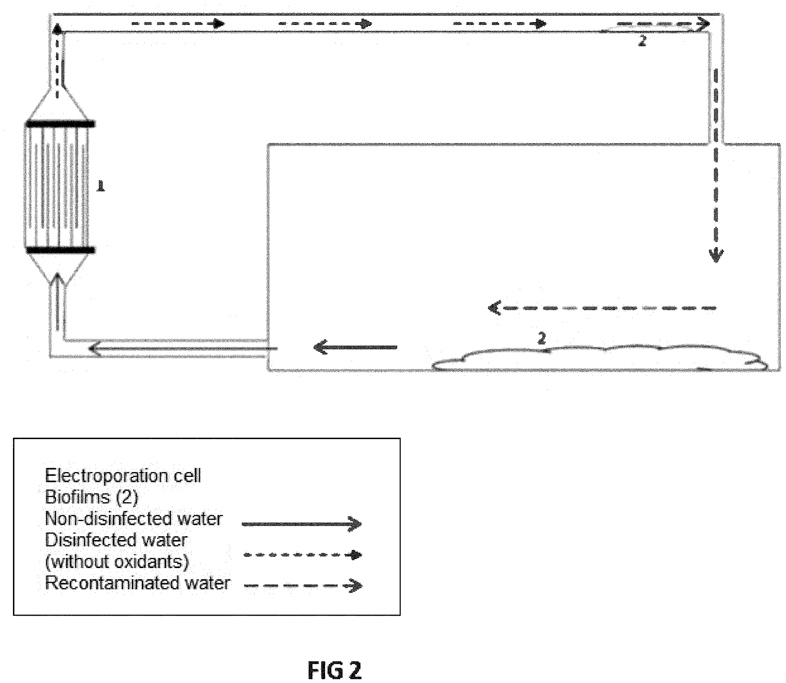

Figure 2 is a view of a recirculation line that permits all the water of the circuit to be treated in the electroporation cell(s), in addition to the biofilms that could be generated in the remote points of the circuit, acting as reinfection foci of the water.
Figure 3 is a view of the mixed electroporation and electro-oxidation cells where the electro-physical phenomenon is combined in the reactors with the direct electro-oxidation phenomena and electrochemical generation of oxidants in situ, with the latter acting as a residual biocide in all the points of the circuit.
Figure 4 shows that the presence of reducers in the water is drastically reduced by the effect of the electroporation and the direct electro-oxidation of reducers in the interior of the electroporation/electrolytic cells.
Figure 5 shows a graph where the according to the supply of the reducers in the water and the variations that it provokes in the continual measurement of the value of the redox potential, the system can (by means of adjusting the energy) operate in phase [B] or phase [A+B], with the phase [A+B] having a higher energy requirement than phase [B].
Figure 6 shows the value(s) of corrected redox potential, with origin in the sampling point(s) obtained by the probe(s).

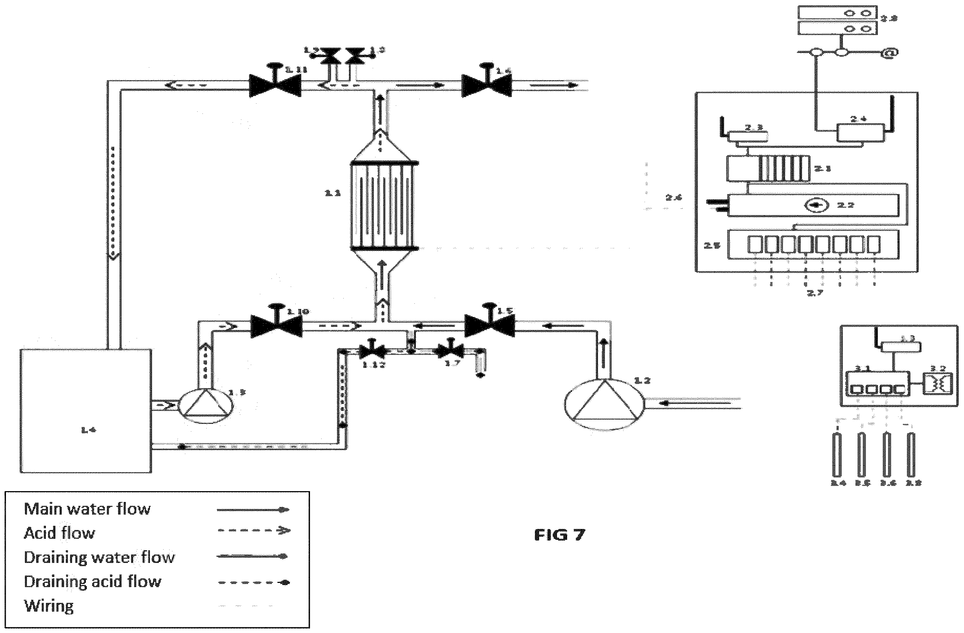

Figure 7 shows a general outline of the system that is installed in the main water circuit subject to treatment, indicating its elements.

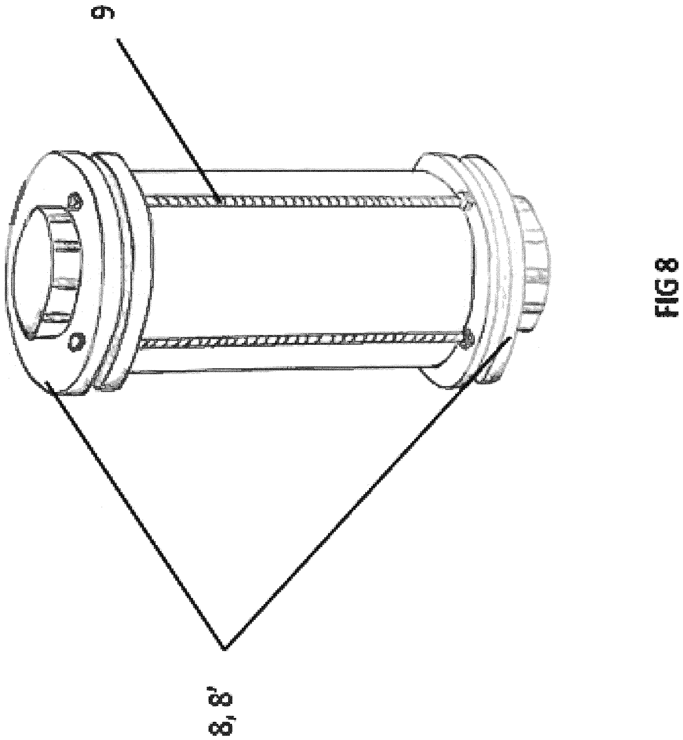

Figure 8 shows an external view of the mixed cell (1.1)

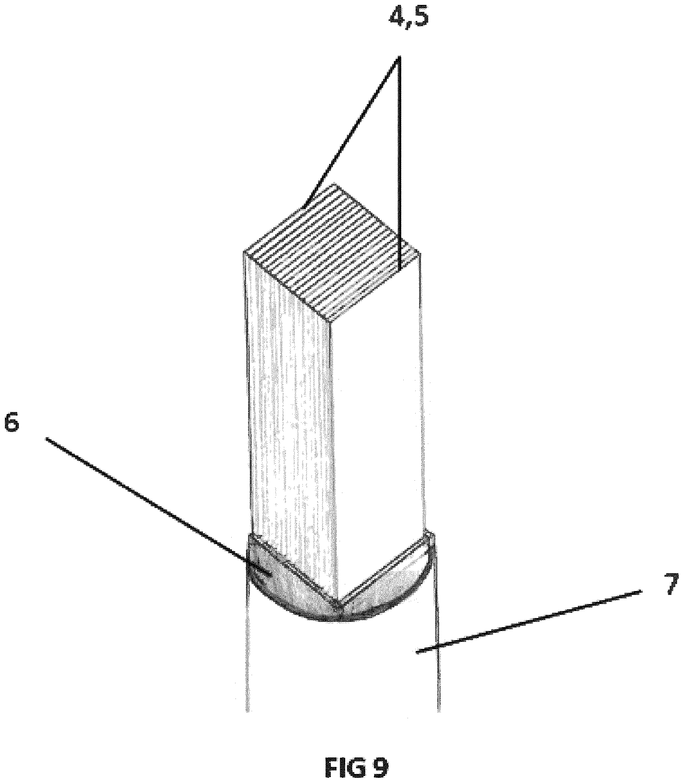

Figure 9 shows an internal view of the mixed cell (1.1)

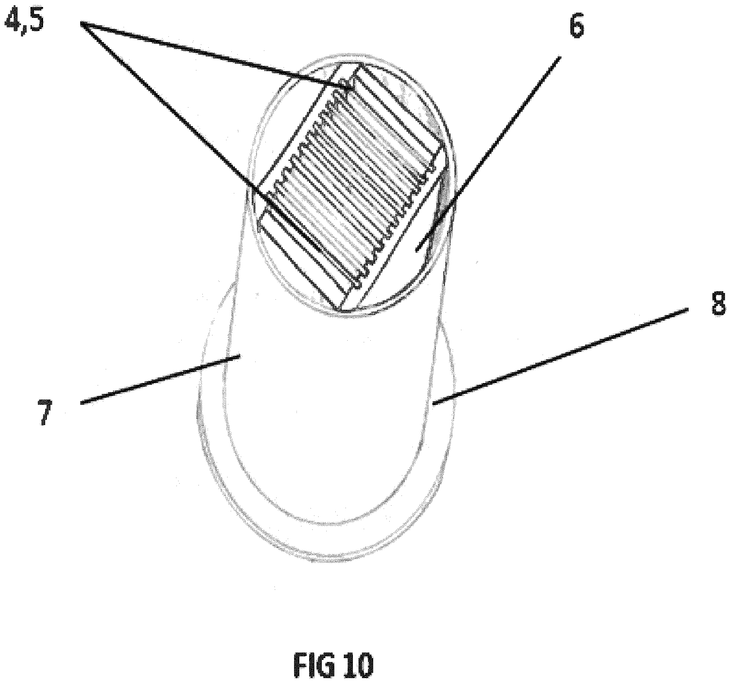

Figure 10 shows an elevation view of the internal and external part of the mixed cell (1.1) of this invention.

### DESCRIPTION OF THE INVENTION

The presence in the water of a determined concentration of oxidants (such as could be active chlorine) in opposition to the concentration of reducers in it (bacteria, ammonia, organic material and others), gives as a result a measurable balance known as oxidation reduction potential or redox potential that, therefore, well conceptualized and managed, represents an objective parameter, an indicator of the sanitary hygienic state of the water in the type of installations that are subject of this patent. In this way, in a circuit with retention of water and with a typical microbiological risk, as may be that of a swimming pool or a cooling tower in which measurements of the value of the redox potential are obtained by means of an electrode of reference, the decrease in the value of the redox potential is due to the increase of material of a biological, microbiological and organic or inorganic material origin in relation to the oxidants present or else to the decrease of these oxidants in relation to the present reducers. Similarly, in the opposite sense, an increase in the value of the redox potential would indicate an increase of the oxidants with respect to the reducers or a decrease of the reducers with respect to the oxidants.

This invention represents precisely the combination in two simultaneous or alternative phases (according to the level of energy applied) of the electroporation and advanced electro-oxidation techniques, in such a way that they achieve the water treatment objectives in this type of installations, avoiding all the inconveniences of the traditional techniques and ensuring an extraordinary water quality.

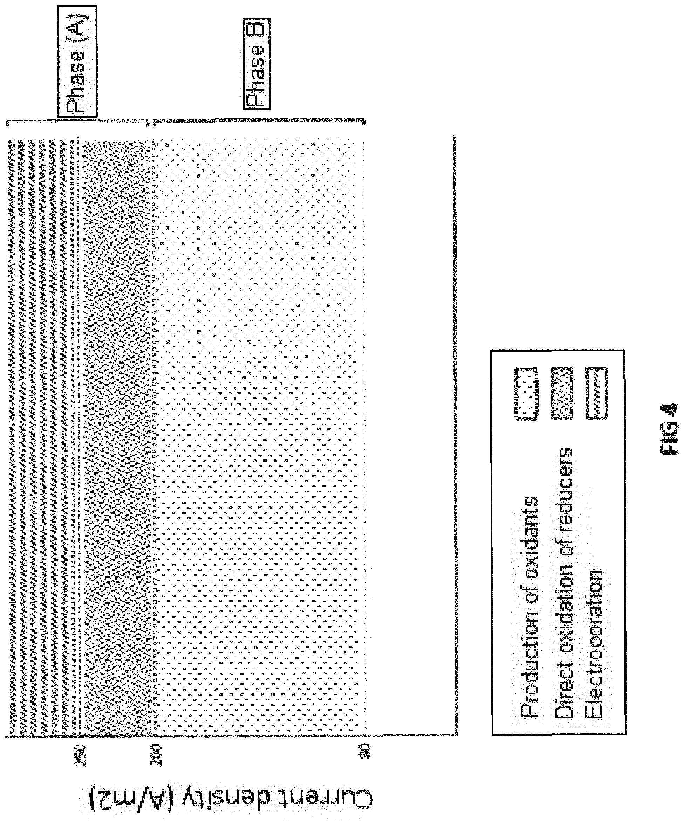

Phase [A] (fig. 4). The presence of reducers in the water due to the effect of the electroporation and the direct electro-oxidation of reducers in the interior of the electroporation/electrolytic cells is drastically reduced.

Phase [B] (fig.4) Selective electro-oxidation, for the production in situ of oxidants (such as active chlorine generated from the chlorides dissolved naturally in the water or the hydroxyl radicals) in the electroporation cells appropriately designed and manufactured for such purpose. This residual oxidant, generated under minimal presence of reducers previously eliminated in Phase [A], will keep the circuit clean and serve as a plug against a possible increase of reducers in the water, reflecting the behaviour of the concentration in the alterations of the ORP being reflected, whose relative tendency will serve to understand and adjust the entire process.

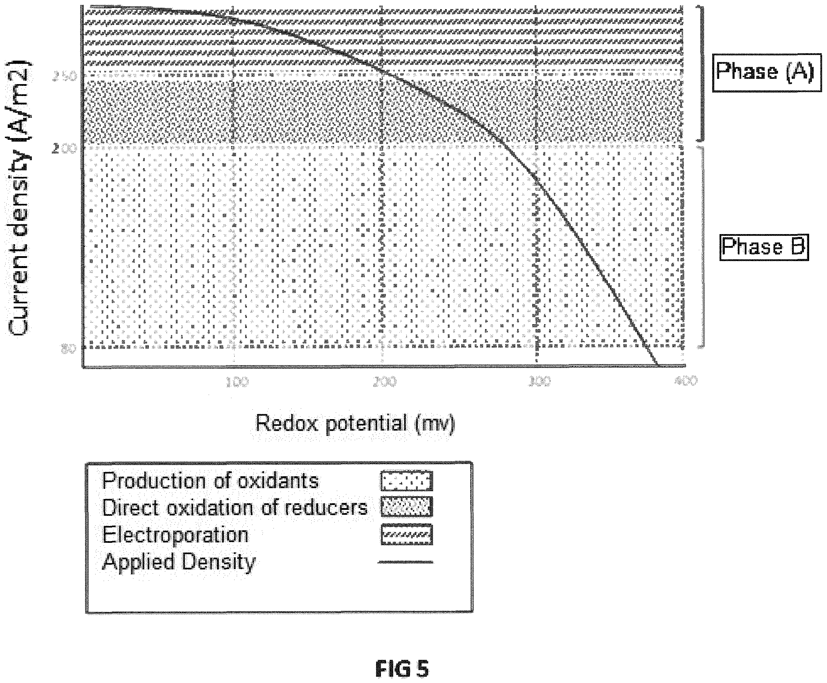

According to the supply of reducers in the water and the variations that it provokes in the continuous measurement of the value of the redox potential, the system can (by adjusting the energy) operate in phase [B] or phase [A+B] (fig. 4, fig. 5), with the phase [A+B] having a greater energy requirement than the phase [B].

The radical capacity of improvement of the water supplied by phase [A], allows maintaining a low dependence on the residual oxidant generated (phase [B]), in such a way that it is not necessary to generate it intensively and the behaviour of its concentration is very stable.

The consequent technological challenge is to achieve the dynamic application of the electrical fields required for the achieving of: (i) the electroporation (high current densities > 250 A/m2) (fig. 4) and (ii) the direct oxidation of reducers in the reactors (> 200A/m2) (fig. 4) and (iii) the generation of oxidants, which begin to be produced in the electrolytic cell under electric potentials of less intensity (< 100A/m2) (fig.4).

For the purpose of designing an industrial system that allows the application of the method, the elements that are listed below have been made available, among which stand out those related to the obtaining and distribution of the signals (reliability of the signal, elimination of interferences of the probes and in the wireless transmission of the signal); the design of the electrolytic cell (which must operate efficiently the electroporation, the advanced oxidation and the electroporation); the design of the hydraulic circuits and their logic; the design of the electronic power system that allows the application of the different current densities at every moment, regardless of the electrical conductivity of the water in each case; the design of the system that allows automatic maintenance, and the software and control electronics, which manage all the decisions and lead to a continual improvement through automatic learning.

### DESCRIPTION OF A PREFERRED REALIZATION OF THE INVENTION

The present preferred realization is materialized in a system that is installed in the main water circuit that is to be treated, where the water is confined or semi-confined (swimming pool, tank, cooling tower, ornamental fountains or other similar circuits).

The system includes the following elements:
At least one mixed cell (electroporation-electro-oxidation) (1.1) that includes a plurality of anodes and cathodes (4,5) distributed in such a way that they form a structure in the shape of a prism and are housed in an internal casing (6) with a structure in the shape of a rectangular parallelepiped, where this internal casing (6) is in turn housed in an external casing (7) of a cylindrical shape, with the ends comprised by connection flanges (8) and (8') and joined to said casing (7) by means of closing rods (9);
At least one source of adjustable current and voltage (2.2);
At least one REDOX probe (3.4);
A transformer/insulator to avoid possible interferences by electrical currents derived from the signals from the probes (3.2);
At least one pH probe (3.6), so that the pH datum can be obtained instantaneously of the water to be treated and, when the secondary acid circuit goes into operation, the pH of this solution;
At least one temperature probe (3.8);
At least one electric conductivity probe (3.5);
At least one controller for the probes (3.1);
One controller (2.1) connected with wires or wirelessly to all the elements and programmed to be able to carry out automatically the following operations: Storage of the calibration data, algorithms and operating program; Adjust the source current; Record and store the working parameters and the data measured by the probes; Modify the working intensity within a customizable working range and limited by the capacity of the source current; Carry out the automatic maintenance of the electrolytic cell through the management of the circuit, driven by means of the algorithm stored in said controller (2.1);
A low-frequency signal emitter (3.3) located next to the probe controller (3.1);
A signal receiver (2.3) located next to the controller (2.1);
A communications modem (2.4) connected to the controller (2.1);
Connection means for data (fibre, mobile GPRS/3G/4G/5G);
A server (2.8) accessible through the Internet platform programmed to receive the data sent from the controller (2.1), store them, process them and send back an update of the working algorithms, as well operate and handle remotely any manoeuvre or function of the system;
A hydraulic treatment circuit for the recirculation of water from and to a storage tank (1.4) passing through the mixed cell (1.1), where the water is treated, that includes a water pump (1.2) and water line;
A secondary cleaning circuit, completely isolated from the hydraulic treatment circuit, that allows the circulation of an acid solution through the interior of the mixed cell (1.1), from and to a tank (1.4) prepared to contain this type of solutions, including the water line, the tank (1.4) and the acid pump (1.3);
A set of solenoid valves (1.5, 1.6, 1.7, 1.8, 1.9, 1.10, 1.11, 1.12) that opens and closes the hydraulic treatment circuits and the secondary cleaning circuit in which the mixed electroporation/electrolytic cell (1.1) is involved, in an independent, alternative and insulated form, according to the orders sent from the controller (2.1) through the wiring (2.7); and
A jet of fluid pumps connected to the controller (2.1) through wiring (2.7) and that allows the circulation of water (main circuit) or acid (secondary cleaning circuit).

The functioning of the system is done by means of a method where the controller (2.1) incorporates an operating program where the adjustment instructions for treating the water are established. This adjustment is established from the instantaneous value of the redox potential of treated water. In the first place, this instantaneous value is corrected analytically by correction factors according to pH and temperature. Once corrected, the treatment control system operates with the instructions for maintaining a determined range of redox potential in the water, established by a pair of maximum and minimum values (ORPMAX-ORPMIN) and which normally vary between 300 and 500 mv, but which will be customizable according to the requirements of each installation.

In this redox potential range we will find the quality of water with minimum concentration of reducers (for the effect of Phase [A] of the treatment) and a moderate load of oxidants (maintained by means of Phase [B] of the treatment). The definition of "moderate load of oxidants" will be determined by the criterion of the manager and/or imposed by the legal regulation that is operable in each case.

According to the redox potential value in the sampling point, the controller (2.1) can manage the power source in order to bring about the following signals (fig.5):
- Zero: Phase [B] does not operate, Phase [A]+[B] does not operate. When the value of the redox potential is situated in the area of optimal values and its tendency is stable.
- Phase [B]: When the behaviour of the redox potential values require minor or moderate correction.
- Phase [A]+[B]: when the redox potential value requires major correction or when the moderate correction tends towards major.

The probes of: temperature (3.8), conductivity (3.5), pH (3.6) and redox potential (3.4) carry out a continuous measurement at the sampling point or control. Each time interval "ts", the probe controller (3.1) through the emitter (3.3) will send to the receiver (2.3) that is connected to the controller (2.1) the values of the probes' signals. This emission is done by means low-frequency radio signals (ZIGBee protocol or similar), or by means of optical fibre, Ethernet or any other reliable method of signal transmission.

The working intensity of the power supply and, therefore, the current density that circulates through the mixed electroporation/electro-oxidation cell (1.1), will be, as explained, a variable intensity (fig.5) established automatically in accordance with an algorithm "alg_I" as a function of the redox potential value. This algorithm is susceptible to being updated from the server by virtue of innovations brought about by an automatic learning system that operates as follows:
At the initial moment, t=0, the controller (2.1) operates based on a standard initial algorithm "alg_I(0) *f*(ORP)" as described below.

With regular frequency from t=0, the following operation data are sent to the server by VPN to be recorded in the database:
- Date
- Time
- ORP value
- pH value
- Temperature value
- Conductivity value
- Corrected ORP value
- Intensity value
- Voltage value
- Current density value
- Residual oxidant value (analytical value loaded manually with less frequency)

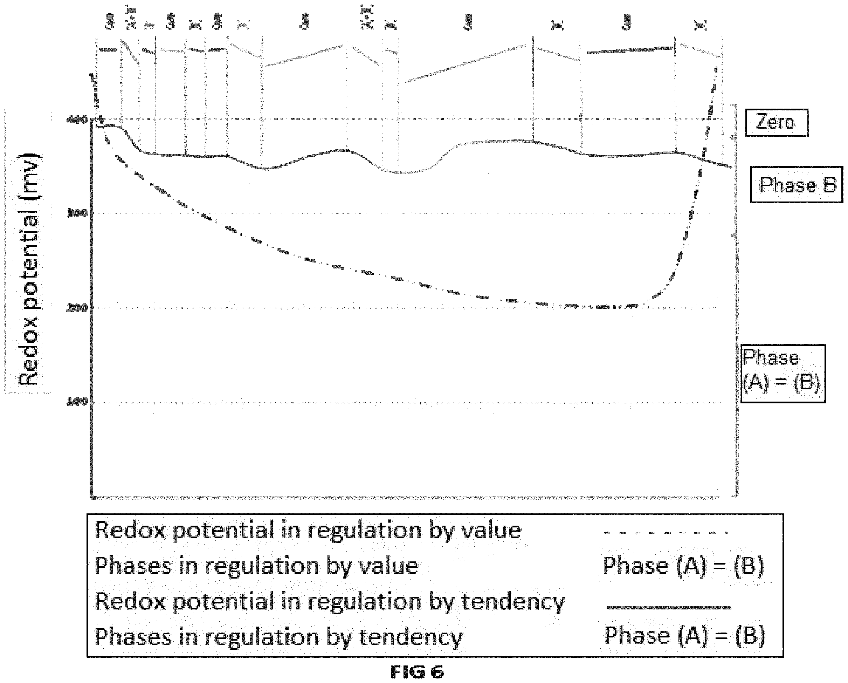

When the volume of data reaches a statistically significant value, statistical models in the server begin to operate that recognizes possible patterns of behavioural trends of the redox potential as well as its "sensitivity" or susceptibility to each of the treatment phases ([A], [B]). From all that, an algorithm "alg_I(1) *f*(ORP)" (fig.6) is inferred which is more predictive than the original in making adjustments according to tendencies. This algorithm is sent to the controller (2.1) by VPN for its updating.

In this way, in view of the value(s) of the corrected redox potential(s), with origin in the sampling point(s) obtained by the probes, the controller (2.1) makes the following decisions (fig. 6):
Where:
ORPi: is the instantaneous corrected redox potential value at the moment i ORPMIN, ORPMAX, ORPII and ORPhl. The values of the minimum admitted, maximum admitted, low and high redox potential, respectively, by means of those that are set out in the adjustment.
mi: the mean slope of the curve that represents the instantaneous sequential values of redox potential according to the time, calculated as the mean of the values of the slope of said curve at the moment i for a given time interval ti.
ti: the time interval between the moment i and the moment (i-5').
m and M: the values of the curve *f*(ORP,t) that indicate the need to force a tendency change in the behaviour of ORP, and that is customized in each installation, also being subject of updating by automatic learning.
   - If ORPi < ORPMIN Activate Phase [A] + Phase [B]
   - If ORPi > ORPMAX Go to position zero of the source (stop).
   - If ORPMIN < ORPi < ORPII
   - If mi<0 Activate Phase [A] + Phase [B]
   - If mi≥0 Activate Phase [B]
   - If ORPII < ORPi < ORPhl→
   - If mi<0:
   - If |mi|>|m| Activate Phase [A] + Phase [B]
   - If |mi|<|m| Activate Phase [B]
   - If mi≥0:
   - If mi<M Activate Phase [B]
   - If mi≥M Zero (stop of source)
   - If ORPhl < ORPi < ORPMAX
   - If mi<0 Phase [B]
   - If mi≥0 Go to position zero of the source (stop).

The system presents an operating method of automatic maintenance by means of an algorithm which through the controller (2.1) constantly processes the following data:
- Working intensity
- Working voltage
- Conductivity of the water
- Electrical resistance of the mixed electroporation/electro-oxidation cell in initial conditions.

From the processing of the data, the following is obtained:
Electrical resistance of the water according to the electric conductivity (*f*[cond]) Global electrical resistance of the system (Water + mixed electroporation/electro-oxidation cell): According to the intensity and the voltage (*f*[I,v]).

Particular electrical resistance of the mixed electroporation/electro-oxidation cell (Rci), which will be according to the electrical resistance of the water and the global electrical resistance of the system *f*[Ra, Rs].

Increase in particular electrical resistance of the mixed cell: Taking as RC0 the particular electrical resistance of the mixed cell in initial conditions.

When the algorithm detects an increase in the particular electrical resistance of the mixed cell (1.1) (prompted mainly by the accumulation of lime and/or dirt in the electrodes) higher than that permitted, by means of customization of the controller (2.1), a self-cleaning sequence is executed. According to the increase in the resistance and, therefore, of the accumulated dirt, the order will be given immediately or it will wait to be executed within a predefined timeframe as ideal for the execution of maintenance operations.

For the execution of the cleaning, the controller (2.1) sends signals to the different mechanical elements (sources, valves, pumps) in order to execute sequentially the following operations:
Stoppage of the power supply (2.2) of the mixed cell (1.1) (if activated).

Stoppage of the water pump (1.2).

Closure of the solenoid valves (1.5 and 1.6) of the main circuit (water).

Opening of the draining circuit of the water by means of the solenoid valves (1.7 and 1.9) contained in the mixed cell (1.1).

Closure of the draining of water by means of the solenoid valves (1.7 and 1.9) contained in the mixed cell (1.1).

Opening of the closed recirculation circuit of acid by means of the solenoid valves (1.10 and 1.11).

Activation of the acid pump (1.3).

This last step remains active during a customizable time and once finalized, the sequence continues:
Stoppage of the acid pump (1.3).

Opening of the acid recovery circuit contained in the mixed cell (1.1) by means of solenoid valves (1.10 and 1.9).

Closing of the closed acid recirculation circuit by means of the solenoid valves (1.10 and 1.11).

Closing of the acid recovery circuit contained in the mixed cell (1.1) by means of the solenoid valves (1.10 and 1.9).

Opening of the rinsing circuit by means of the solenoid valves (1.8 and 1.7).

Closing of the rinsing circuit by means of the solenoid valves (1.8 and 1.7)

Opening of the main circuit (water) by means of the solenoid valves (1.5 and 1.6)

Activation of the water pump (1.2).

Activation of the power source (2.2) if necessary.

## Claims

1. System for the disinfection and preservation of water in circuits with water accumulation, by means of the combined application of electroporation and oxidation that consists of:
At least one mixed cell (electroporation-electro-oxidation) (1.1) that includes a plurality of anodes and cathodes (4,5) distributed in such a way that they form a structure in the shape of a prism and are housed in an internal casing (6) with a structure in the shape of a rectangular parallelepiped, where this internal casing (6) is in turn housed in an external casing (7) of a cylindrical shape, with the ends comprised by connection flanges (8) and (8') and joined to said casing (7) by means of closing rods (9);
At least one source of adjustable current and voltage (2.2);
At least one REDOX probe (3.4);
A transformer/insulator (3.2);
At least one pH probe (3.6);
At least one temperature probe (3.8);
At least one electric conductivity probe (3.5);
At least one controller for the probes (3.1);
One controller (2.1) connected with wires or wirelessly to all the elements and programmed;
A low-frequency signal emitter (3.3) located next to the probe controller (3.1);
A signal receiver (2.3) located next to the controller (2.1);
A communications modem (2.4) connected to the controller (2.1);
Connection means for data (fibre, mobile GPRS/3G/4G/5G);
A server (2.8) accessible through the Internet platform programmed to receive the data sent from the controller (2.1);
A hydraulic treatment circuit for the recirculation of water from and to a storage tank (1.4) passing through the mixed cell (1.1);
A secondary cleaning circuit that completely isolates from the hydraulic treatment circuit the circulation of an acid solution through the interior of the mixed cell (1.1), from and to a tank (1.4);
A set of solenoid valves (1.5, 1.6, 1.7, 1.8, 1.9, 1.10, 1.11, 1.12);
A jet of fluid pumps connected to the controller (2.1) through wiring (2.7).

2. System for the disinfection and preservation of water in circuits with water accumulation, by means of the combined application of electroporation and oxidation according to claim 1 where the controller (2.1) stores the calibration, algorithm and operating program data.

3. System for the disinfection and preservation of water in circuits with water accumulation, by means of the combined application of electroporation and oxidation according to claim 1 where the controller (2.1) adjusts the current source, records and stores the working parameters and the data measured by the probes.

4. System for the disinfection and preservation of water in circuits with water accumulation, by means of the combined application of electroporation and oxidation according to claims 1 and 2 where the controller (2.1) modifies the working intensity within a customizable working range, limited by the capacity of the current source and carries out the automatic maintenance of the electrolytic cell through the algorithm stored in said controller (2.1)1.

5. System for the disinfection and preservation of water in circuits with water accumulation, by means of the combined application of electroporation and oxidation that is **characterized in that** the controller (2.1) incorporates an operating program where the instructions for water treatment adjustment are established.

6. Method for the disinfection and preservation of water in circuits with water accumulation, by means of the combined application of electroporation and oxidation according to claim 5 that is **characterized in that** the adjustment is set starting with the instantaneous redox potential value of the treated water, with this instantaneous value being corrected analytically by means of correction factors according to the pH and temperature.

7. Method for the disinfection and preservation of water in circuits with water accumulation, by means of the combined application of electroporation and oxidation according to claims 5 and 6 that is **characterized in that** once the redox potential of the treated water is corrected, the treatment control system maintains a determined range of the redox potential in the water that varies between a pair of maximum and minimum values, preferably 300 and 500 mv.

8. Method for the disinfection and preservation of water in circuits with water accumulation, by means of the combined application of electroporation and oxidation according to claims 6 - 7 that is **characterized in that**, in the range of redox potential, we find water quality with a minimal concentration of reducers and a moderate load of oxidants.

9. Method for the disinfection and preservation of water in circuits with water accumulation, by means of the combined application of electroporation and oxidation according to claims 6 - 8 that is **characterized in that** according to the redox potential value at the sampling point, the controller (2.1) manages the power source in order to bring about the following signals:
▪ Zero: Phase [B] does not operate, Phase [A]+[B] does not operate. When the value of the redox potential is situated in the area of optimal values and its tendency is stable.
▪ Phase [B]: When the behaviour of the redox potential values require minor or moderate correction.
▪ Phase [A]+[B]: when the redox potential value requires major correction or when the moderate correction tends towards major.

10. Method for the disinfection and preservation of water in circuits with water accumulation, by means of the combined application of electroporation and oxidation according to claims 6 - 9 that is **characterized in that** the probes of temperature (3.8), conductivity (3.5), pH (3.6) and redox potential (3.4) continuously take measurements at the sampling point or control and at each time interval; the controller of the probes (3.1) through the emitter (3.3) sends to the receiver (2.3) that is connected to the controller (2.1) the values of the signals from the probes.

11. Method for the disinfection and preservation of water in circuits with water accumulation, by means of the combined application of electroporation and oxidation according to claims 6 - 10 that is **characterized in that** the working intensity of the power source and, therefore, the current density that circulates through the mixed electroporation/electro-oxidation cell (1.1), is a variable intensity, established automatically according to an algorithm "alg_I" according to the redox potential value.

12. Method for the disinfection and preservation of water in circuits with water accumulation, by means of the combined application of electroporation and oxidation according to claim 11 that is **characterized in that** the algorithm is updated from the server (2.8) through an automatic learning system.

13. Method for the disinfection and preservation of water in circuits with water accumulation, by means of the combined application of electroporation and oxidation according to claim 12 that is **characterized in that** the automatic learning system operates by means of the following stages:
a) At the initial moment, t=0, the controller (2.1) operates based on a standard initial algorithm "alg_I(0) *f*(ORP)".
b) With regular frequency from t=0, the following operating data are sent to the server by VPN to be recorded in the database: Date, Time, Redox potential value, pH value, Temperature value, Conductivity value, Corrected redox potential value, Intensity value, Voltage value, Current density value, and Residual oxidant value;
c) When the volume of data reaches a statistically significant value, statistical models in the server (2.1) begin to operate that recognize possible patterns of behavioural trends of the redox potential as well as its "sensitivity" or susceptibility to each of the treatment phases ([A], [B]).
d) The system infers an algorithm "alg_I(1) *f*(ORP)" that is sent to the controller (2.1) by VPN for its updating..

14. Method for the operation of the automatic maintenance that is **characterized in that** by means of an algorithm and through the controller (2.1) the following data are processed constantly: Working intensity, working voltage, conductivity of the water, electrical resistance of the mixed cell (1.1) in initial conditions detecting an increase in the particular electrical resistance of the mixed cell (1.1).
